# EUROPEAN PATENT SPECIFICATION

(11) **EP 2 994 698 B1**
(45) Date of publication and mention of the grant of the patent: **27.06.2018**
(21) Application number: 14732385.1
(22) Date of filing: 09.05.2014
(51) Int. Cl.: F24D 3/14, F24D 3/16, E01C 11/26

(54) **MODULAR STRUCTURE, FOR RAISED FLOORS AND THE LIKE**
MODULARE STRUKTUR FÜR DOPPELBÖDEN UND DERGLEICHEN
STRUCTURE MODULAIRE, POUR PLANCHERS SURÉLEVÉS ET AUTRES

(30) Priority: 10.05.2013 IT BO20130214
(43) Date of publication of application: 16.03.2016
(73) Proprietor: D-Matic S.r.l., 40033 Casalecchio di Reno (IT)
(72) Inventor: PERRI, Davide, I-40053 Bazzano (IT)
(74) Representative: Modiano, Micaela Nadia
(86) International application number: PCT/IB2014/061322
(87) International publication number: WO 2014/181300

(56) References cited:
- EP-A1- 0 371 268
- EP-A1- 2 320 007
- EP-A2- 1 835 234
- WO-A1-2006/064531
- WO-A2-2010/072408
- CA-A1- 2 302 413
- FR-A1- 2 385 050

## Description

The present invention relates to a modular structure for raised floors and the like.

As is known, in order to allow use by customers, the outdoor spaces of public establishments, such as restaurants, pizzerias, coffee shops, cafés and pubs, are sometimes furnished by the owners of such establishment by arranging tables, chairs, counters, etcetera, directly on public soil or on raised floors (also known as elevated floors) arranged conveniently, and optionally sheltering them with canopies or gazebos.

Therefore, the need is felt increasingly to ensure the best conditions of temperature, and optionally humidity, also in these outdoor spaces, in order to use them when atmospheric conditions are not ideal (for example in the cold months, or when the temperatures are particularly high), ensuring in any case maximum comfort to the customers.

For these reasons, for example, devices such as infrared lamps, patio heaters, et cetera that allow to heat the immediate vicinity of the installation point, increasing its temperature, are commercially widespread.

Likewise, it is frequent to use air conditioners or the like to cool the spaces referenced above, if the environmental conditions are difficult to bear due to excessively high temperature and/or humidity values.

Such constructive solutions, though, are not devoid of drawbacks.

In fact, they have several problems in common, such as the often high consumption or the fact that the areas affected by the heating/cooling produced by the devices are too confined, since the benefits hardly extend to distances greater than a few meters from the installation point. Moreover, even in these areas of interest the temperature distribution is often very uneven: the people that are nearer to the patio heaters or lamps of the type referenced above, for example, are in fact struck by an often excessive amount of heat, while the people that are farther away experience excessively marginal beneficial effects.

Moreover, indeed in relation to the high consumption, besides the safety problems, local and non-local administrations are imposing increasingly stringent limitations to the use of patio heaters, lamps, conditioners, et cetera.

Last but not least, it should be noted that all the devices cited above force onerous assembly and disassembly activities as the atmospheric conditions change, and more generally at the transition from summer months to winter months, and vice versa, in addition to precautionary measures of various kinds, in order to prevent them from being damaged accidentally or not during normal operation or, especially, at the closing times of the public establishment.

EP 1 835 234 A2 discloses a mat or floor heating system, that comprises at least one base layer of plastics material, on the upper face of which are formed channels for housing the channel-like part of a sheet-like layer of aluminum or other suitable material, which bears on the whole upper face of the base layer to act as a heat distributor and accumulator, and also as a reinforcement to protect the heating circuit which is made from tubes housed in the channel-like part of the sheet-like layer of aluminum whose channel-like part is provided at its ends with apertures through which the said tubes can bend and pass from one channel to the next, to form a zigzag covering the mat in a distributed way, the tubes being connected at the end apertures to manifold tubes housed in suitable transverse channels of the base layer and provided at their ends with means for connection to a unit for the production and low-pressure circulation of a liquid. Another floor heating system is disclosed in patent application CA2302413A1. The aim of the present invention is to solve the problems described above, by providing a modular structure that allows, when required, to heat or cool alternatively the space in which it is installed. In order to solve the above problems the invention proposes a modular structure according to claim 1. Within this aim, an object of the invention is to provide a modular structure that can be installed easily at outdoor or indoor spaces in a practical and versatile manner.

Another object of the invention is to provide a modular structure that ensures the heating and cooling of the entire surrounding space, in a uniform manner and with low consumption.

Another object of the invention is to provide a modular structure that ensures high reliability in operation and does not require frequent activities for maintenance or for its safekeeping.

Another object of the present invention is to provide a modular structure that can be obtained easily starting from commonly commercially available elements and materials.

Another object of the present invention is to provide a modular structure that has low costs and is safe in use.

In accordance with the invention, there is provided a modular structure for raised floors and the like, as defined in the appended claims.

Further characteristics and advantages of the invention will become better apparent from the description of a preferred but not exclusive embodiment of the modular structure according to the invention, illustrated by way of non-limiting example in the accompanying drawings, wherein:

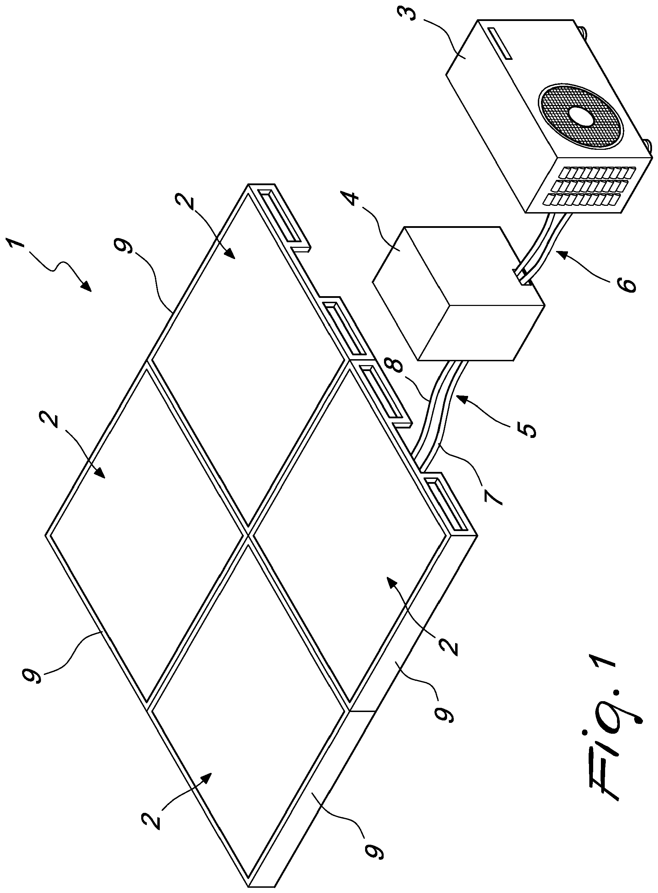

Figure 1 is a schematic perspective view of the modular structure according to the invention;
Figure 2 is a schematic top view of the panel without its upper portion.

With reference to the figures, a modular structure, for raised floors and the like, is designated generally by the reference numeral 1 and comprises a plurality of panels 2, which can be mutually coupled and placed on the ground, at a predefined surface, in order to provide a covering platform, indeed of the raised floor type and the like.

As is known, such constructive solutions (known also as elevated floors) are usually laid on the predefined surface, such as for example the outdoor spaces of public establishments (restaurants, pizzerias, coffee shops, cafes, pubs, et cetera), in order to ensure better acoustic isolation, and/or in order to define, with the underlying surface, an interspace for accommodating wiring and equipment, and/or simply in order to offer the customers an environment that is more appealing and pleasant as well as more comfortable.

Indeed the use for public establishments (but also private properties), and/or the furnishing of open spaces such as open air sections, courtyards, gazebos, balconies, terraces, public gardens, et cetera, constitutes therefore the preferred application of the present invention, and thus reference shall be made to it in the continuation of the present description.

It is useful to point out at the outset that the use of the structure 1 according to the invention also for different applications (for example for pavilions or other closed buildings), and for the provision of platforms, floors of another type or even walls, in relation to the specific requirements, is not excluded.

According to the invention, the modular structure 1 comprises a conditioning unit 3, such as a heat pump: as is known, such units 3 (known also as conditioners) are crossed by a gas that is subjected to a thermodynamic cycle (thanks to the use, in sequence, of a compressor, a condenser, a throttling valve and an evaporator). The unit 3 can be selectively activated for heating or cooling a generic user, since by reversing the operating cycle (and therefore operating as a heat pump) it is possible to determine selectively the transfer or absorption of heat by means of the gas, substantially for winter or summer operation respectively.

More precisely, the gas that flows through the unit 3 is affected by an exchanger 4, so that the unit 3 can be activated selectively to heat or cool a heat transfer fluid that circulates inside a duct 5 that leads to the exchanger 4.

In even greater detail, the gas, conveyed by a pipe 6, can circulate in a coil (preferably made of stainless steel) with a high exchange surface that is accommodated in the exchanger 4 and faces a related useful portion of the duct 5, in order to provide indeed heat exchange with the heat transfer fluid, which in turn is circulated in the duct 5 for example by means of an electric pump.

The exchanger 4 also is preferably made of stainless steel and selected with a capacity comprised preferably between 60 liters and 120 liters.

It is specified that the possibility is not excluded to provide the structure 1 with electrical heaters (or resistors), designed to heat the heat transfer fluid, without using therefore the gas circulating in the coil (maintaining therefore the unit 3 inactive), when it is necessary only to heat the space of interest and one wishes to contain consumptions further.

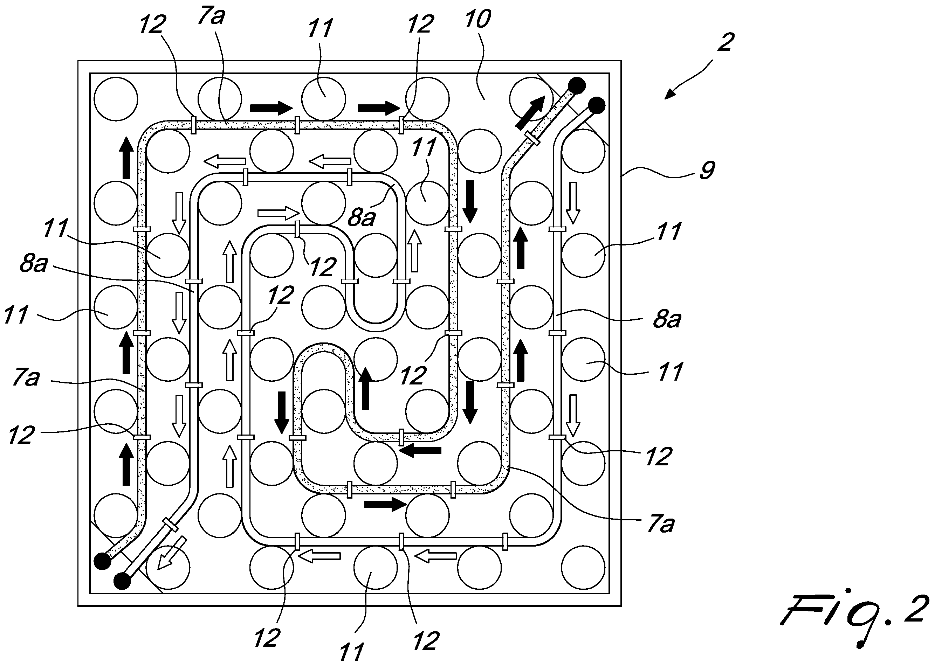

The duct 5 comprises at least one outgoing portion 7 and at least one return portion 8, which are arranged in series and are constituted respectively by a plurality of outgoing portions 7a and a plurality of return portions 8a: at least one outgoing portion 7a and at least one return portion 8a are accommodated in at least one respective panel 2 (as for example in Figure 2), selectively in order to transfer heat externally or absorb heat from the outside (and therefore, indeed, heat or cool the space of interest, adjacent to the panel 2).

More particularly, according to the preferred constructive solution, each panel 2 comprises at least one respective outgoing portion 7a and at least one respective return portion 8a, selectively in order to transfer heat to the outside or absorb heat from the outside.

Moreover, in the preferred but not exclusive constructive solution, the outgoing portion 7 and the return portion 8 are mutually connected by a U-shaped connector, which is accommodated in one of the panels 2 and is interposed between a respective terminal outgoing portion 7a and a corresponding initial return portion 8a.

In practice, therefore, the outgoing portion 7 (that extends from the exchanger 4) comprises a plurality of outgoing portions 7a, each of which is accommodated in a respective panel 2 and connected in series to outgoing portions 7a, which are accommodated in adjacent panels 2; the terminal outgoing portion 7a is connected instead, at one end and thanks to the U-shaped connector, to the initial return portion 8a, arranged in the same panel 2.

Likewise, the return portion 8, which leads to the exchanger 4, comprises then a plurality of return portions 8a, each of which is accommodated in a respective panel 2 (together with a corresponding outgoing portion 7a) and connected in series to return portions 8a accommodated in adjacent panels 2, up to the entrance of the duct 5 in the exchanger 4.

Moreover, the modular structure 1 can comprise at least one Y-shaped connector, which is accommodated in a panel 2 and is interposed between respective portions 7a, 8a to provide additional auxiliary portions or additional branches of the duct 5 as a function of the specific requirements.

According to a constructive solution of considerable practical interest, cited by way of non-limiting example of the application of the invention, each panel 2 comprises an outer frame 9 (for example made of light alloy) that has a substantially box-like shape, can be placed on the ground and accommodates internally a lower base layer, which is made of an insulating material (and has a variable thickness as a function of the design requirements and of the required technical specifications).

In the configuration for use, the lower layer is therefore directed with its first face toward the ground on which the panel 2 is arranged, while on a second face 10, which is opposite the first face, the portions 7a, 8a are positioned stably and are in turn surmounted by a corresponding walking surface with high heat conductivity (for example made of resin with the addition of a surfactant), for exchanging heat with the outside.

More particularly, along the second face 10 of the layer, multiple raised portions 11 having a preferably cylindrical shape are distributed uniformly so that a network of channels is defined between said raised portions 11, each channel being capable of accommodating, according to a configuration that can vary at will, respective fractions of the portions 7a, 8a, which abut against the raised portions 11.

In the solution proposed in Figure 2, for example, the portions 7a, 8a are bent so as to assume a substantially spiral-like shape and are arranged mutually side by side, so that each section of an outgoing portion 7a is proximate to a respective section of return portion 8a.

Therefore, it should be noted that every sector of the panel 2, thanks to the arrangement of two portions 7a, 8a, can be affected both by fluid at a higher temperature, which flows through the outgoing portion 7a, and by fluid at a lower temperature, which circulates in the return portion 8a, or vice versa, and this ensures maximum uniformity of heat exchange for the entire panel 2 (or for the entire structure 1, by repeating the above described configuration for all the panels 2).

Moreover, the portions 7a, 8a might also be arranged in the channels, according to different geometric configurations, in relation to the specific design requirements.

Conveniently, the modular structure 1 according to the invention comprises respective U-shaped elements 12, preferably of the quick-coupling type and constituted, as is known, by U-shaped cylindrical bars, which can be inserted within the layer (with their terminal flaps), in order to ensure the stable anchoring of each portion 7a, 8a to the corresponding second face 10.

Advantageously, each panel 2 comprises quick coupling means, of the male/female type (although the possibility to use different constructive solutions, directed to the same aim, is not excluded), in order to ensure stable coupling to the adjacent panels 2.

Operation of the modular structure according to the invention is as follows.

The panels 2 can be placed and fixed on the ground, according to the desired configuration, at any predefined surface, belonging to an outdoor space or an indoor space, of which one wishes in any case to control the temperature (and optionally the humidity).

Moreover, there is the possibility to provide the panels 2 with resting feet that are adjustable in height, in order to vary the vertical level at which said panels 2 are to be arranged with respect to the ground, spacing them from it.

The conditioning unit 3 allows selectively to cool or heat (obviously upon, respectively, summer operation or winter operation) the gas that circulates inside it, which in turn exchanges heat, in the exchanger 4, with the heat transfer fluid (for example water, also blended with additives in order to ensure greater fluidity).

The electric pump thus circulates the heat transfer fluid along the duct 5 and, by crossing the outgoing portion 7 and the return portion 8 (and the corresponding portions 7a, 8a), crosses all the panels 2.

In this manner, at each panel 2 the heat transfer fluid can exchange heat with the overlying space, through the corresponding walking surface, cooling it or heating it according to the requirements, and thereby achieving the intended aim.

The modularity of the structure 1 ensures great practicality and versatility, and the choice to accommodate each portion 7a, 8a in one or more channels defined between the raised portions 11 contributes to these goals, ensuring the possibility to give any type of shape to the duct 5 as a function of the specific requirements.

In any case, as shown, each panel 2 accommodates a portion 7a of the outgoing portion 7 and a portion 8a of the return portion 8, and therefore two fractions of the duct 5 at mutually different temperatures, ensuring thereby maximum heat exchange uniformity, preventing, for example, the risk that at the panels 2 near the delivery of the exchanger 4 the amount of heat exchanged with the outside is too high and vice versa too low for the panels 2 adjacent to the return of the duct 5 in the exchanger 4.

Moreover, the use of a fluid as a vehicle for the heat to be exchanged with the outside allows to reduce consumptions drastically (in particular of electric power), with respect to the solutions of the known type.

It is moreover clear that once installed, the modular structure 1 and the raised floor above it that it forms does not require specific maintenance or safekeeping activity and there are no laborious interventions when the transition from winter or summer operation is necessary (in this circumstance it is in fact enough to switch the operation of the unit 3 and reverse the cycle of the gas that circulates therein).

In practice it has been found that the modular structure according to the invention achieves fully the intended aim, since the use of a conditioning unit, crossed by a gas affected by an exchanger and actuatable selectively to heat or cool a heat transfer fluid that circulates inside a duct, which comprises at least one outgoing portion and at least one return portion, in turn having at least one outgoing portion and at least one return portion accommodated in at least one respective said panel, allows to provide a modular structure adapted to heat and/or cool the space in which is installed.

The invention thus conceived is susceptible of numerous modifications and variations, all of which are within the scope of the appended claims; all the details may further be replaced with other technically equivalent elements.

For example, the structure 1 might be provided with a dehumidifier, intended indeed to control the conditions of humidity of the space of interest, thus contributing to the well-being and comfort of the customers or in any case of the people who walk or stand on the platform formed by the panels 2.

Moreover, it is possible to accommodate the exchanger 4 inside the conditioning unit 3 (with the heat transfer fluid and the duct 5 that exit therefore from the unit 3 itself), or to arrange both the unit 3 and the exchanger 4 in a containment shell, optionally giving the latter an appealing design, in order to increase the aesthetic effectiveness of the structure 1 according to the invention.

In the examples of embodiment shown, individual characteristics, given in relation to specific examples, may actually be interchanged with other different characteristics that exist in other examples of embodiment.

In practice, the materials used, as well as the dimensions, may be any according to requirements and to the state of the art.

The panels 2, for example, may be selected with a square plan (as in the accompanying figures) and with a side that is 1 meter long, but the provision of structures 1 according to the invention with different sizes and dimensions (or the proposal of structures 1 according to the invention provided with panels 2 having two or more different shapes) is not excluded.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular structure (1) for raised floors, comprising a plurality of quadrangular panels (2), which can be mutually coupled and placed on the ground, at a predefined surface, to provide a covering platform, in particular a raised floor, and a conditioning unit (3), through which a gas flows which is affected by an exchanger (4) and can be activated selectively to heat or cool a heat transfer fluid that circulates inside a duct (5) that leads to said exchanger (4), said duct (5) comprising at least one outgoing portion (7) and at least one return portion (8), which are arranged in series and are constituted respectively by a plurality of outgoing portions (7a) and of return portions (8a), at least one outgoing portion (7a) and at least one return portion (8a) being accommodated in at least one respective said panel (2), selectively to transfer heat to the outside of the modular structure (1) or absorb heat from the outside of the modular structure (1), each one of said panels (2) comprising coupling means, for stable coupling to the adjacent panels (2), **characterized in that,** within each of said respective panel (2), said outgoing portion (7a) and said return portion (8a) are bent so as to assume a substantially spiral-like shape and are arranged mutually side by side, so that each section of an outgoing portion 7a is proximate to a respective section of return portion 8a and in such a way that both of said portions (7a, 8a) have a first end adjacent to a first vertex of said quadrangular panels (2) and a second end adjacent to a second vertex, opposite to said first vertex; said coupling means being placed adjacent to said first vertex in correspondence with said first ends of said portions (7a, 8a) and adjacent to said second vertex in correspondence with said second ends of said portions (7a, 8a).

2. The modular structure (1) according to claim 1, **characterized in that** each one of said panels (2) comprises at least one respective outgoing portion (7a) and at least one respective return portion (8a), selectively to transfer heat to the outside of the modular structure (1) or absorb heat from the outside of the modular structure (1).

3. The modular structure (1) according to claims 1 and 2, **characterized in that** said outgoing portion (7) and said return portion (8) are mutually connected by a U-shaped connector, which is accommodated in one of said panels (2) and is interposed between a respective said terminal outgoing portion (7a) and a corresponding initial return portion (8a).

4. The modular structure (1) according to one or more of the preceding claims, **characterized in that** each one of said panels (2) comprises an outer frame (9) that has a substantially boxlike shape and can be placed on the ground, said frame (9) accommodating internally a lower base layer, which is made of an insulating material and is directed toward the ground, with a first face, in the configuration for use, on a second face (10) of said layer, which is opposite with respect to said first face, there being stably placed said portions (7a, 8a), which are surmounted by a corresponding walking surface with high heat conductivity, for the exchange of heat with the outside of the modular structure (1).

5. The modular structure (1) according to claim 4, **characterized in that** along said second face (10) of said layer there are uniformly distributed multiple raised portions (11) that have a preferably cylindrical shape, a network of channels being defined between said raised portions (11) in order to accommodate, according to a configuration that can vary at will, said portions (7a, 8a), which abut against said raised portions (11).

6. The modular structure (1) according to claims 4 and 5, **characterized in that** it comprises respective U-shaped elements (12), which can be inserted within said layer, for the stable anchoring of each one of said portions (7a, 8a) to the corresponding said second face (10).

7. The modular structure (1) according to one or more of the preceding claims, **characterized in that** said coupling means are of the male/female type.

## Patentansprüche

1. Eine modulare Struktur (1) für Doppelböden, die eine Vielzahl viereckiger Platten (2) umfasst, welche miteinander gekoppelt und auf den Boden, auf einer vordefinierten Oberfläche, platziert werden können, um eine Abdeckplattform, insbesondere einen Doppelboden, bereitzustellen, und eine Klimatisierungseinheit (3), durch die ein Gas strömt, das von einem Tauscher (4) beeinflusst wird und aktiviert werden kann, um ein Wärmeübertragungsfluid wahlweise zu erwärmen oder zu kühlen, das in einer Leitung (5) zirkuliert, die zu dem Tauscher (4) hin führt, wobei die Leitung (5) mindestens einen Ausgangsabschnitt (7) und mindestens einen Rückführabschnitt (8) umfasst, die seriell angeordnet sind und aus einer Vielzahl von Ausgangsabschnitten (7a) beziehungsweise Rückführabschnitten (8a) bestehen, wobei mindestens ein Ausgangsabschnitt (7a) und mindestens ein Rückführabschnitt (8a) in mindestens einer entsprechenden Platte (2) untergebracht sind, um wahlweise Wärme an die Außenseite der modularen Struktur (1) zu übertragen oder Wärme von der Außenseite der modularen Struktur (1) zu absorbieren; wobei jede der Platten (2) Kopplungsmittel für die stabile Kopplung mit den benachbarten Platten (2) umfasst; **dadurch gekennzeichnet, dass** in jeder entsprechenden Platte (2) der Ausgangsabschnitt (7a) und der Rückführabschnitt (8a) gebogen sind, um eine im Wesentlichen spiralartige Form anzunehmen, und nebeneinander angeordnet sind, so dass jeder Abschnitt eines Ausgangsabschnitts (7a) an einen entsprechenden Abschnitt des Rückführabschnitts (8a) angrenzt, und so dass beide Abschnitte (7a, 8a) ein erstes Ende haben, das an einen ersten Scheitelpunkt der viereckigen Platten (2) angrenzt, und ein zweites Ende, das an einen zweiten Scheitelpunkt gegenüber dem ersten Scheitelpunkt angrenzt; wobei die Kopplungsmittel angrenzend an den ersten Scheitelpunkt in Übereinstimmung mit den ersten Enden der Abschnitte (7a, 8a) und angrenzend an den zweiten Scheitelpunkt in Übereinstimmung mit den zweiten Enden der Abschnitte (7a, 8a) platziert sind.

2. Die modulare Struktur (1) gemäß Anspruch 1, **dadurch gekennzeichnet, dass** jede der Platten (2) mindestens einen entsprechenden Ausgangsabschnitt (7a) und mindestens einen entsprechenden Rückführabschnitt (8a) umfasst, um wahlweise Wärme an die Außenseite der modularen Struktur (1) zu übertragen oder Wärme von der Außenseite der modularen Struktur (1) zu absorbieren.

3. Die modulare Struktur (1) gemäß den Ansprüchen 1 und 2, **dadurch gekennzeichnet, dass** der Ausgangsabschnitt (7) und der Rückführabschnitt (8) miteinander durch ein U-förmiges Verbindungsstück verbunden sind, das in einer der Platten (2) untergebracht und zwischen dem entsprechenden Ausgangs-Endabschnitt (7a) und einem dazugehörigen Rückführ-Anfangsabschnitt (8a) angeordnet ist.

4. Die modulare Struktur (1) gemäß einem oder mehreren der obigen Ansprüche, **dadurch gekennzeichnet, dass** jede der Platten (2) einen äußeren Rahmen (9) umfasst, der eine im Wesentlichen kastenartige Form hat und auf den Boden gestellt werden kann, wobei der Rahmen (9) in seinem Inneren eine untere Basisschicht enthält, die aus einem Isoliermaterial besteht und zum Boden hin gerichtet ist, mit einer ersten Seite, in der Gebrauchskonfiguration, auf einer zweiten Seite (10) der Schicht, die der ersten Seite gegenüberliegt, wobei die Abschnitte (7a, 8a), die von einer entsprechenden Trittfläche mit hoher Wärmeleitfähigkeit überlagert werden, zum Zwecke des Austauschs von Wärme mit der Außenseite der modularen Struktur (1), stabil positioniert werden.

5. Die modulare Struktur (1) gemäß Anspruch 4, **dadurch gekennzeichnet, dass** sich entlang der zweiten Seite (10) der Schicht mehrere homogen verteilte erhöhte Abschnitte (11) befinden, die eine vorzugsweise zylindrische Form haben, wobei ein Netzwerk von Kanälen zwischen den erhöhten Abschnitten (11) bestimmt ist, um entsprechend einer Konfiguration, die nach Wunsch variieren kann, die Abschnitte (7a, 8a) aufzunehmen, die an die erhöhten Abschnitte (11) anstoßen.

6. Die modulare Struktur (1) gemäß den Ansprüchen 4 und 5, **dadurch gekennzeichnet, dass** sie entsprechende U-förmige Elemente (12) umfasst, die zur festen Verankerung jedes der Abschnitte (7a, 8a) in der entsprechenden zweiten Seite (10) in die Schicht eingefügt werden können.

7. Die modulare Struktur (1) gemäß einem oder mehreren der obigen Ansprüche, **dadurch gekennzeichnet, dass** die Kopplungsmittel vom Außen-/Innen-Typ sind.

## Revendications

1. Structure modulaire (1) pour planchers surélevés, comprenant une pluralité de panneaux quadrangulaires (2) qui peuvent être mutuellement accouplés et placés sur le sol, au niveau d'une surface prédéfinie, pour produire une plateforme couvrante, en particulier un plancher surélevé, et une unité de conditionnement (3) à travers laquelle passe un gaz sur lequel influe un échangeur (4) et qui peut être activée sélectivement pour chauffer ou refroidir un fluide de transfert de chaleur qui circule à l'intérieur d'une conduite (5) qui mène audit échangeur (4), ladite conduite (5) comprenant au moins une partie sortante (7) et au moins une partie de retour (8) qui sont agencées en série et sont constituées respectivement par une pluralité de parties sortantes (7a) et de parties de retour (8a), au moins une partie sortante (7a) et au moins une partie de retour (8a) étant logées dans au moins un panneau (2) respectif, pour sélectivement transférer de la chaleur à l'extérieur de la structure modulaire (1) ou absorber de la chaleur de l'extérieur de la structure modulaire (1), chacun desdits panneaux (2) comprenant des moyens d'accouplement permettant un accouplement stable aux panneaux (2) adjacents, **caractérisée en ce que**, à l'intérieur de chacun desdits panneaux (2) respectifs, ladite partie sortante (7a) et ladite partie de retour (8a) sont courbées de façon à adopter une forme sensiblement en spirale et sont agencées mutuellement côte à côte, de manière que chaque section d'une partie sortante (7a) soit proche d'une section respective d'une partie de retour (8a) et de telle sorte que lesdites parties (7a, 8a) présentent toutes les deux une première extrémité adjacente à un premier sommet desdits panneaux quadrangulaires (2) et une deuxième extrémité adjacente à un deuxième sommet opposé audit premier sommet ; lesdits moyens d'accouplement étant placés adjacents audit premier sommet en correspondance avec lesdites premières extrémités desdites parties (7a, 8a) et adjacents audit deuxième sommet en correspondance avec lesdites deuxièmes extrémités desdites parties (7a, 8a).

2. Structure modulaire (1) selon la revendication 1, **caractérisée en ce que** chacun desdits panneaux (2) comprend au moins une partie sortante (7a) respective et au moins une partie de retour (8a) respective, pour sélectivement transférer de la chaleur à l'extérieur de la structure modulaire (1) ou absorber de la chaleur de l'extérieur de la structure modulaire (1).

3. Structure modulaire (1) selon les revendications 1 et 2, **caractérisée en ce que** ladite partie sortante (7) et ladite partie de retour (8) sont mutuellement raccordées par un raccord en U, qui est logé dans l'un desdits panneaux (2) et est interposé entre une partie sortante (7a) terminale respective et une partie de retour (8a) initiale correspondante.

4. Structure modulaire (1) selon une ou plusieurs des revendications précédentes, **caractérisée en ce que** chacun desdits panneaux (2) comprend un cadre extérieur (9) qui présente sensiblement une forme de boîte et peut être placé sur le sol, ledit cadre (9) logeant en son intérieur une couche de base inférieure, qui est faite d'un matériau isolant et est orientée vers le sol par une première face, dans la configuration d'utilisation, et sur une seconde face (10) de ladite couche, qui est à l'opposé de ladite première face, sont placées de façon stable lesdites parties (7a, 8a), qui sont surmontées par une surface de marche à forte conductivité thermique, pour l'échange de chaleur avec l'extérieur de la structure modulaire (1).

5. Structure modulaire (1) selon la revendication 4, **caractérisée en ce que** le long de ladite seconde face (10) de ladite couche sont uniformément réparties de multiples parties saillantes (11) qui présentent une forme de préférence cylindrique, un réseau de gorges étant défini entre lesdites parties saillantes (11) afin de loger, selon une configuration qui peut varier à volonté, lesdites parties (7a, 8a) qui viennent en appui contre lesdites parties saillantes (11).

6. Structure modulaire (1) selon les revendications 4 et 5, **caractérisée en ce qu'**elle comprend des éléments en U (12) respectifs, qui peuvent être insérés dans ladite couche, pour l'ancrage stable de chacune desdites parties (7a, 8a) à ladite seconde face (10) correspondante.

7. Structure modulaire (1) selon une ou plusieurs des revendications précédentes, **caractérisée en ce que** lesdits moyens d'accouplement sont du type mâle/femelle.
